(19)

Europäisches
Patentamt
European
Patent Office
Office européen
des brevets

(11)  **EP 3 736 936 A1**

(12)  **EUROPEAN PATENT APPLICATION**

(43) Date of publication:
**11.11.2020 Bulletin 2020/46**

(51) Int Cl.:
**H02J 3/01** $^{(2006.01)}$  **H02J 3/38** $^{(2006.01)}$

(21) Application number: **19173711.3**

(22) Date of filing: **10.05.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Gamesa Renewable Energy
A/S
7330 Brande (DK)**

(72) Inventor: **The designation of the inventor has not
yet been filed**

(74) Representative: **Aspacher, Karl-Georg
Siemens Gamesa Renewable Energy GmbH & Co.
KG
Otto-Hahn-Ring 6
81739 München (DE)**

(54) **DETERMINING MODEL PARAMETER VALUES DESCRIBING HARMONIC BEHAVIOR OF WIND
TURBINE GENERATORS**

(57)     There is described a method of determining a source parameter value ($U_{v,WEA}$, $I_{v,WEA}$) and an impedance parameter value ($Z_{v,WEA}$) for an electrical model (1, 2) of a wind turbine generator, wherein the electrical model is representative of a selected harmonic occurring during operation of the wind turbine generator. The method comprises obtaining (310) a set of measured voltage values ($U_{v,NAP}$) and a set of measured current values ($I_{v,NAP}$) corresponding to the selected harmonic, calculating (315) an initial source parameter value ($U_{v,WEA,0}$) and an initial impedance parameter value ($Z_{v,WEA,0}$) based on the set of measured voltage values and the set of measured current values, calculating (330) a respective fitting index (r) for each of a plurality of candidate combinations of respective candidate source parameter values and candidate impedance parameter values, wherein each candidate source parameter value is obtained as a multiple of the initial source parameter value divided by a first predetermined number and each candidate impedance parameter value is obtained as a multiple of the initial source parameter value divided by a second predetermined number, selecting a subset of the candidate combinations for which the corresponding fitting index is maximal, and determining (360) the source parameter value ($U_{v,WEA,opt}$) and the impedance parameter value ($Z_{v,WEA,opt}$) based on the selected subset of candidate combinations.

FIG 3

**Description**

Field of Invention

The present invention relates to the field of wind turbine generators, in particular to methods and systems for determining a source parameter value and an impedance parameter value for an electrical model of a wind turbine generator, wherein the electrical model is representative of a selected harmonic occurring during operation of the wind turbine generator.

Art Background

Harmonic oscillations in power grids, i.e. oscillations at multiples of the grid frequency, are a well-known problem. When connecting a wind turbine generator to a power grid, it is therefore desirable to know how the wind turbine generator may contribute and react to such oscillations.

There may thus be a need for a simple and efficient way of obtaining useful information on the harmonic behavior of a wind turbine generator.

Summary of the Invention

This need may be met by the subject matter according to the independent claims. Advantageous embodiments of the present invention are described by the dependent claims.

According to a first aspect of the invention there is provided a method of determining a source parameter value and an impedance parameter value for an electrical model of a wind turbine generator, wherein the electrical model is representative of a selected harmonic occurring during operation of the wind turbine generator. The method comprises (a) obtaining a set of measured voltage values and a set of measured current values corresponding to the selected harmonic, (b) calculating an initial source parameter value and an initial impedance parameter value based on the set of measured voltage values and the set of measured current values, (c) calculating a respective fitting index for each of a plurality of candidate combinations of respective candidate source parameter values and candidate impedance parameter values, wherein each candidate source parameter value is obtained as a multiple of the initial source parameter value divided by a first predetermined number and each candidate impedance parameter value is obtained as a multiple of the initial source parameter value divided by a second predetermined number, (d) selecting a subset of the candidate combinations for which the corresponding fitting index is maximal, and (e) determining the source parameter value and the impedance parameter value based on the selected subset of candidate combinations.

This aspect of the invention is based on the idea that for a selected harmonic (such as 1*f, 2*f, 3*f, 4*f, 5*f and so on, where f denotes the grid frequency), a set of model parameter values (source parameter value and impedance parameter value) is determined, which describes the electrical behavior of the wind turbine generator with regard to the selected harmonic. This is done by obtaining measured voltage and current values corresponding to the selected harmonic (e.g. by applying DFT (Discrete Fourier Transform) or FFT (Fast Fourier Transform) to raw measurement data). Based on these sets of measurement data, initial parameter values are calculated and then a fitting index is calculated for each of a plurality of candidate combinations of candidate source parameter values and candidate impedance values. The fitting index is indicative of how well a given candidate combination (and the corresponding electrical model) fits the measured reality. The candidate source parameter values are obtained as respective multiples of the initial source parameter values divided by a first predetermined number and the candidate impedance parameter values are obtained as respective multiples of the initial impedance parameter value divided by a second predetermined number. In other words, a matrix containing a fitting index for each candidate combination is formed. Then, the subset of candidate combinations having the maximal fitting index is identified and the (final) source parameter value and the (final) impedance parameter value are determined based on this subset. Thus, the candidate combinations with the maximum fitting index are used to determined the desired parameter values (source parameter value and impedance parameter value) .

According to an embodiment of the invention, the set of measured voltage values and the set of measured current values are obtained during operation of the wind turbine generator while it is connected to a power grid.

In other words, the measurements are obtained during normal operation of the wind turbine generator while it is connected to the power grid. In order for the measurements to be representative of a wide variety of situations, the measurements should be collected over a substantive period of time, such as during a week or more of continuous operation.

The measurements are preferably obtained at a coupling point between the wind turbine generator and the power grid or at a point in the vicinity of this coupling point.

According to a further embodiment of the invention, the set of measured voltage values and the set of measured current values are obtained during operation of the wind turbine generator while it is connected to a power grid simulator.

The grid simulator is capable of electrically behaving like a power grid in a wide range of situations. This can in particular be utilized to obtain a wider variation in the collected data in a significantly shorter period of time as compared to the above embodiment which relies on a true power grid. According to a further embodiment of the invention, the power grid simulator is operated to generate a plurality of harmonics at a coupling point between the wind turbine generator and the power grid simulator.

Thereby, it can be assured that sufficient measurement data representative of each harmonic of interest is actually available.

According to a further embodiment of the invention, the electrical model is a Thevenin equivalent circuit, the source parameter value is a Thevenin generator voltage, and the impedance parameter value is a Thevenin series impedance.

In other words, the electrical model consists of an ideal (alternating) voltage generator coupled in series with an impedance. The frequency of the voltage generator is a multiple of the grid frequency (e.g. 50 Hz, 100 Hz, 150 Hz, etc.).

According to a further embodiment of the invention, the initial source parameter value is calculated as a median value of the set of measured voltage values, and the initial impedance parameter value is calculated as the sum of all measured voltage values in the set of measured voltage values divided by the sum of all measured current values in the set of measured current values.

According to a further embodiment of the invention, the electrical model is a Norton equivalent circuit, the source parameter value is a Norton generator current, and the impedance parameter value is a Norton parallel impedance.

In other words, the electrical model consists of an ideal (alternating) current generator coupled in parallel with an impedance. The frequency of the voltage generator is a multiple of the grid frequency (e.g. 50 Hz, 100 Hz, 150 Hz, etc.). According to a further embodiment of the invention, the fitting index is indicative of how well the corresponding candidate combination fits the obtained sets of measured voltage values and measured current values.

The fitting index may preferably be a number between 0 and 1, where a fitting index equal to 0 indicates no or a very bad fit while a fitting index equal to 1 indicates a perfect or very good fit.

According to a further embodiment of the invention, determining the source parameter value comprises (a) determining a minimum source parameter value and a maximum source parameter value in the selected subset of candidate combinations, and (b) determining the source parameter value as a mean value of the minimum source parameter value and the maximum source parameter value.

According to a further embodiment of the invention, determining the impedance parameter value comprises (a) determining a minimum impedance parameter value and a maximum impedance parameter value in the selected subset of candidate combinations, and (b) determining the impedance parameter value as a mean value of the minimum impedance parameter value and the maximum impedance parameter value.

According to a second aspect of the invention there is provided a system for determining a source parameter value and an impedance parameter value for an electrical model of a wind turbine generator, wherein the electrical model is representative of a selected harmonic occurring during operation of the wind turbine generator. The system comprises (a) a measurement unit configured to obtain a set of measured voltage values and a set of measured current values corresponding to the selected harmonic, and (b) a processing unit configured to (b1) calculate an initial source parameter value and an initial impedance parameter value based on the set of measured voltage values and the set of measured current values, (b2) calculate a respective fitting index for each of a plurality of candidate combinations of respective candidate source parameter values and candidate impedance parameter values, wherein each candidate source parameter value is obtained as a multiple of the initial source parameter value divided by a first predetermined number and each candidate impedance parameter value is obtained as a multiple of the initial source parameter value divided by a second predetermined number, (b3) select a subset of the candidate combinations for which the corresponding fitting index is maximal, and (b4) determine the source parameter value and the impedance parameter value based on the selected subset of candidate combinations.

This aspect of the invention is essentially based on the same idea as the first aspect described above.

According to a third aspect of the invention, there is provided a computer program comprising computer executable instructions which, when executed by a computer processor, are adapted to cause the processor to perform the method according to the first aspect or any of the embodiments thereof.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

Brief Description of the Drawing

Figure 1 shows an electrical model utilized in embodiments of the present invention.

Figure 2 shows another electrical model utilized in embodiments of the present invention.

Figure 3 shows a flowchart of a method according to an embodiment of the present invention.

Figure 4 shows a flowchart of a part of the method shown in Figure 3.

Figure 5 shows a flowchart of another part of the method shown in Figure 3.

Figure 6 shows a flowchart of yet another part of the method shown in Figure 3.

Figure 7 shows a plot of measured harmonic voltages and currents in accordance with an embodiment of the present invention.

Figure 8 shows a plot of measured harmonic voltages and currents in accordance with another embodiment of the present invention.

Detailed Description

The illustration in the drawing is schematic. It is noted that in different figures, similar or identical elements are provided with the same reference numerals or with reference numerals which differ only within the first digit.

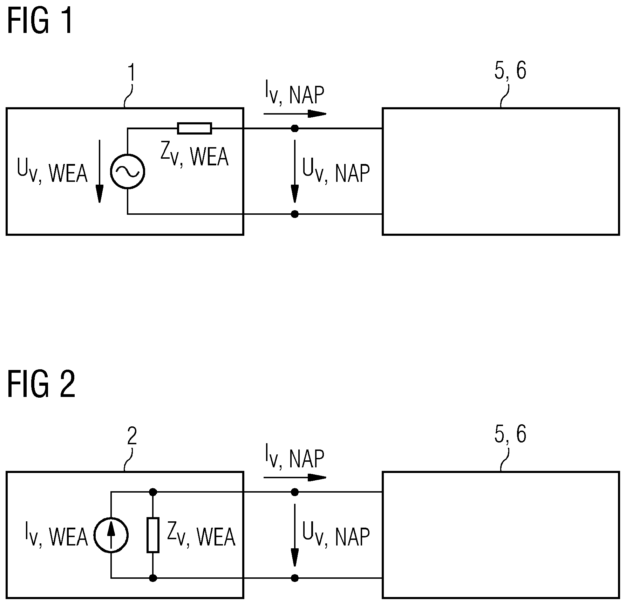

Figure 1 shows an electrical model 1 utilized in embodiments of the present invention. The electrical model 1 is a Thevenin equivalent circuit of a wind turbine generator and comprises a voltage generator in series with an impedance $Z_{v,WEA}$. The voltage generator provides an alternating voltage with magnitude $U_{v,WEA}$ and frequency corresponding to a selected v-th harmonic of a grid frequency (e.g. v*50Hz, v = 1, 2, 3,...). The wind turbine generator represented by the model 1 is coupled to a power grid 5 or a power grid simulator 6. At the point of interconnection between the wind turbine generator represented by the model 1 and the power grid 5 or power grid simulator 6, a voltage $U_{v,NAP}$ and current $I_{v,NAP}$ corresponding to the v-th harmonic are measured, e.g. by applying FFT or DFT to corresponding raw measurement signals.

Figure 2 shows another electrical model 2 utilized in embodiments of the present invention. The electrical model 2 is a Norton equivalent circuit of a wind turbine generator and comprises a current generator in parallel with an impedance $Z_{v,WEA}$. The current generator provides an alternating current with magnitude $I_{v,WEA}$ and frequency corresponding to a selected v-th harmonic of a grid frequency (e.g. v*50Hz, v = 1, 2, 3,...). Like in Figure 1, the wind turbine generator represented by the model 2 is coupled to a power grid 5 or a power grid simulator 6. At the point of interconnection between the wind turbine generator represented by the model 2 and the power grid 5 or power grid simulator 6, a voltage $U_{v,NAP}$ and current $I_{v,NAP}$ corresponding to the v-th harmonic are measured, e.g. by applying FFT or DFT to corresponding raw measurement signals.

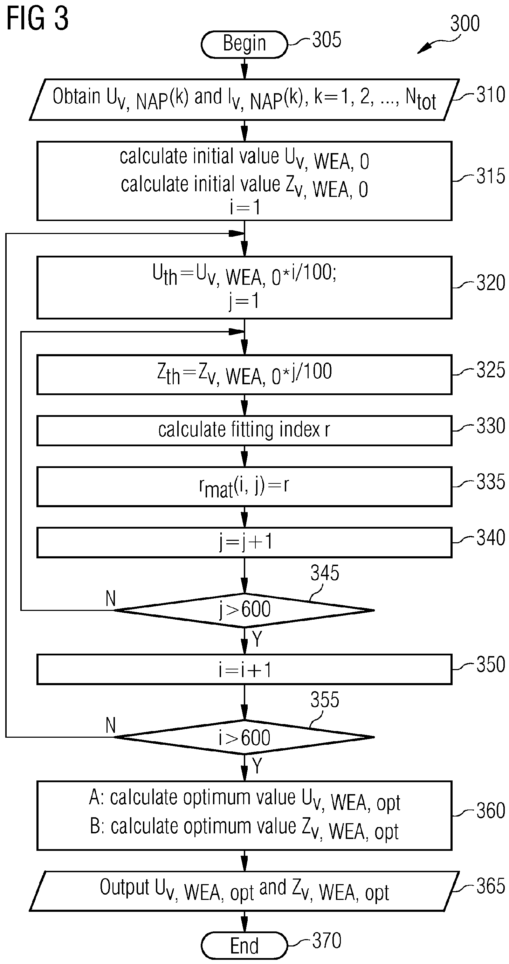

Figure 3 shows a flowchart of a method 300 according to an embodiment of the present invention, more specifically a method 300 of determining a source parameter value $U_{v,WEA}$ and an impedance parameter value $Z_{v,WEA}$ for an electrical model 1 (see Figure 1) of a wind turbine generator, wherein the electrical model is representative of a selected harmonic occurring during operation of the wind turbine generator. In other words, the method aims at determining the source parameter value $U_{v,WEA}$ and impedance parameter value $Z_{v,WEA}$ for a given v-th harmonic.

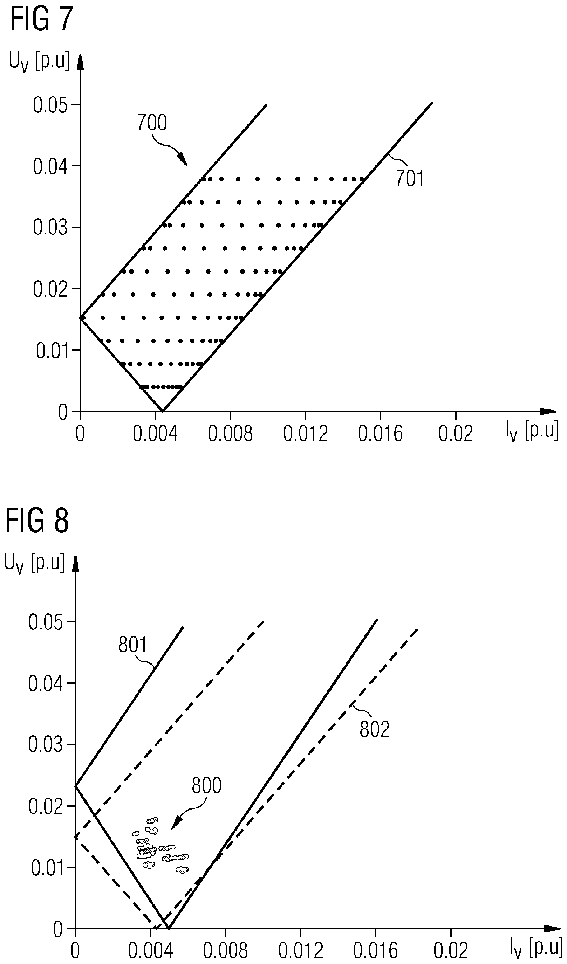

The method 300 begins at 305 and continues at 310 with obtaining a set of measured voltage values $U_{v,NAP}(k)$ and a set of measured current values $I_{v,NAP}(k)$ corresponding to the selected harmonic. The index k has integer values between 1 and $N_{tot}$. The measured values may be obtained over a longer period of time while the wind turbine generator is connected to a power grid 5 or during a (possibly) shorter period of time while the wind turbine generator is connected a power grid simulator 6. This will be discussed in more detail below in conjunction with Figures 7 and 8. In any event, the obtained measurement values represent a variety of voltages and currents associated with the selected v-th harmonic of the grid frequency.

Then, an initial source parameter value $U_{v,WEA,0}$ and an initial impedance parameter value $Z_{v,WEA,0}$ based on the set of measured voltage values and the set of measured current values are calculated at 315. Here, a first index i is set to one, i.e. i = 1. The initial values are starting points for the algorithm and may in particular be calculated as follows:

$$U_{v,WEA,0} = Median\{U_{v,NAP}(1), U_{v,NAP}(2), \dots, U_{v,NAP}(N_{tot})\}$$

$$Z_{v,WEA,0} = \frac{\sum_{k=1}^{N_{tot}} U_{v,NAP}(k)}{\sum_{k=1}^{N_{tot}} I_{v,NAP}(k)}$$

At 320, a candidate source parameter value $U_{th}$ is calculated as

$$U_{th} = U_{v,WEA,0} \cdot i/100$$

and a second index j is set to one, i.e. j = 1.

At 325, a candidate impedance value $Z_{th}$ is calculated as

$$Z_{th} = Z_{v,WEA,0} \cdot j/100.$$

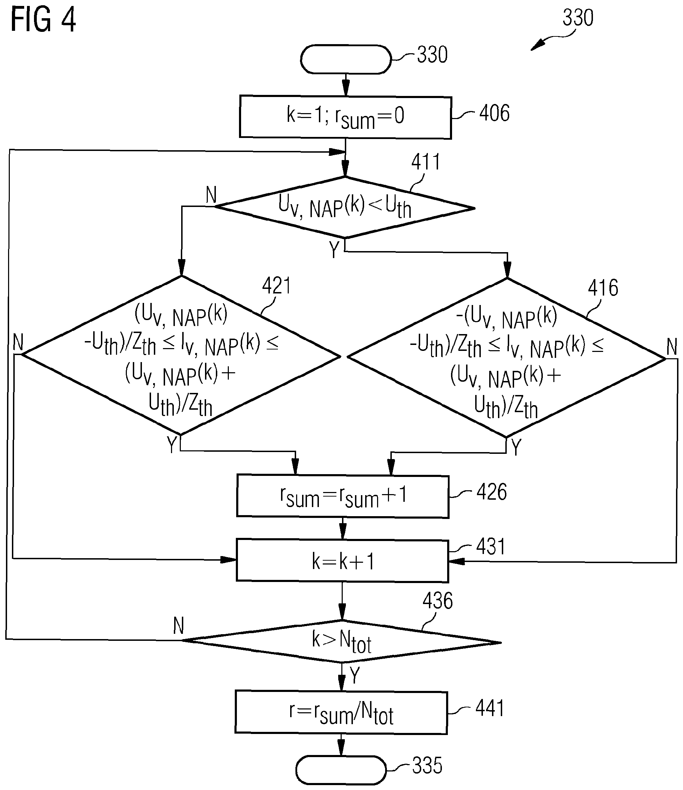

Then, at 330 a fitting index r is calculated for the combination of candidate values $U_{th}$ and $Z_{th}$. The fitting index is preferably a value between 0 (zero) and 1 (one), where a larger value indicates that the combination of candidate values fits the measurements better while a smaller value indicates that the combination of candidate values fits the measurements worse. The calculation of the fitting index r will be discussed in more detail below in conjunction with Figure 4.

At 335, the calculated fitting index r is stored in a matrix $r_{mat}$ at a position corresponding to row i (i=1) and column j (j=1), and then j is incremented by one (j = j + 1) at 340.

At 345, it is determined whether j > 600 and as long as this is not the case, the method returns to 325 and repeats the inner loop, i.e. steps 325, 330, 335, 340, and 345 for each incremented value of j and the corresponding new candidate impedance parameter value $Z_{th}$ calculated at 325.

When it is determined at 345 that j > 600 (i.e. j = 601), the method continues to 350 where the first index i is incremented by one (i = i + 1).

Then, at 355, it is determined whether i > 600 and as long as this is not the case, the method returns back to 320 and repeats the inner loop (i.e. steps 325, 330, 335, 340, and 345) for the corresponding new candidate source parameter value $U_{th}$ calculated at 320.

When it is determined at 355 that i > 600 (i.e. i = 601), the method continues to 360. At this stage, a 600 x 600 matrix $r_{mat}$ has been established by calculating a respective fitting index r for each of a plurality of candidate combinations of respective candidate source parameter values $U_{th}$ and candidate impedance parameter values $Z_{th}$, wherein each candidate source parameter value is obtained as a multiple of the initial source parameter value divided by a first predetermined number (i.e. $U_{th} = U_{v,WEA,0} \cdot i/100$) and each candidate impedance parameter value is obtained as a multiple of the initial source parameter value divided by a second predetermined number (i.e. $Z_{th} = Z_{v,WEA,0} \cdot j/100$). Here, both the first and second predetermined number is equal to 100.

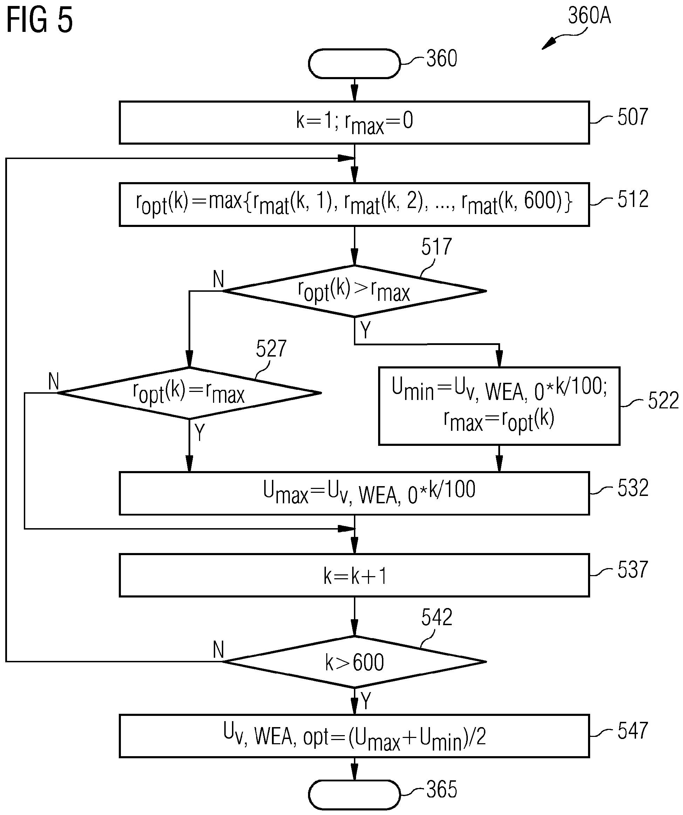

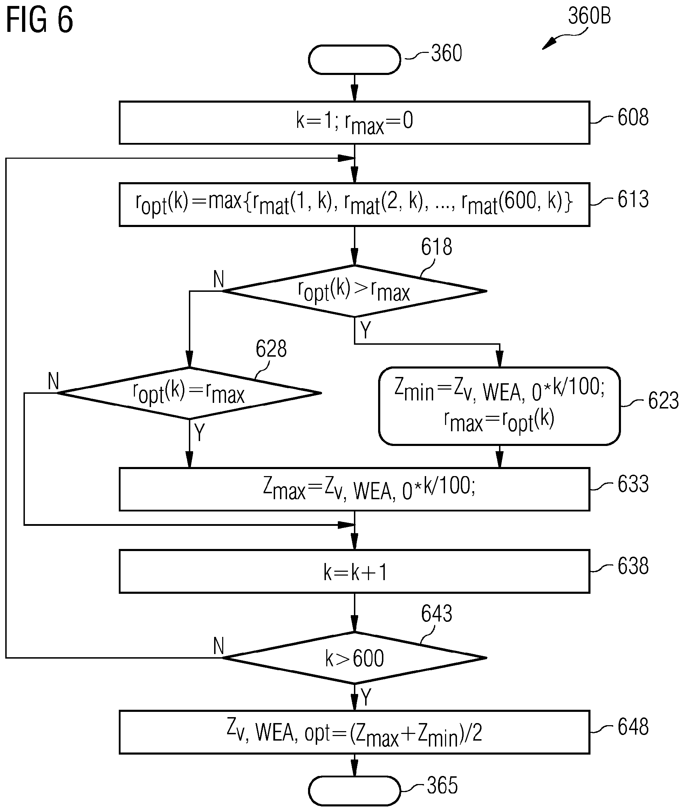

At 360, optimum values $U_{v,WEA,opt}$ and $Z_{v,WEA,opt}$ calculated by selecting a subset of the candidate combinations for which the corresponding fitting index r is maximal, and determining the source parameter value $U_{v,WEA,opt}$ and the impedance parameter value $Z_{v,WEA,opt}$ based on the selected subset of candidate combinations. More specifically, this is done by applying the algorithm 360A shown in Figure 5 and the algorithm 360B shown in Figure 6 to the matrix $r_{mat}$ as will be discussed in more detail further below.

Having obtained the optimum parameter values $U_{v,WEA,opt}$ and $Z_{v,WEA,opt}$, the method 300 continues to 365 where the optimum parameter values are output before the method ends at 370.

Figure 4 shows a flowchart of a part of the method 300 shown in Figure 3. More specifically, Figure 4 shows the calculating 330 of the fitting index r for a given candidate combination of $U_{th}$ and $Z_{th}$. The calculating process 330 begins at 405 where the measurement index k is set to one (k = 1) and the value $r_{sum}$ is set to zero ($r_{sum}$ = 0). Then, at 411, it is determined whether the k-th voltage measurement value $U_{v,NAP}(k)$ is less than the candidate voltage value $U_{th}$, i.e. whether $U_{v,NAP}(k) < U_{th}$. If that is the case, the process continues to 416, otherwise it continues to 421.

At 416, it is determined whether

$$-\left(U_{v,NAP}(k) - U_{th}\right)/Z_{th} \leq I_{v,NAP}(k) \leq \left(U_{v,NAP}(k) + U_{th}\right)/Z_{th}.$$

If this is the case, the process continues to 426 where $r_{sum}$ is incremented by one (i.e. $r_{sum} = r_{sum} + 1$) and then to 431 where k is incremented by one (i.e. k = k + 1). If not, the process goes directly to 431 without incrementing $r_{sum}$.

Similarly at 421, it is determined whether

$$\left(U_{v,NAP}(k) - U_{th}\right)/Z_{th} \leq I_{v,NAP}(k) \leq \left(U_{v,NAP}(k) + U_{th}\right)/Z_{th}.$$

Again, if this is the case, the process continues to 426 where $r_{sum}$ is incremented by one (i.e. $r_{sum} = r_{sum} + 1$) and then to 431 where k is incremented by one (i.e. k = k + 1). If not, the process goes directly to 431 without incrementing $r_{sum}$.

Thereafter, it is determined at 436 whether all measurement values have been used, i.e. whether k > $N_{tot}$. If this is not case, the process returns to 411 and repeats the steps 411, 416/421, 426, 431, and 436. Otherwise, it proceeds to 441 and calculates the fitting index r as $r = r_{sum}/N_{tot}$ before the method 300 continues at 335 as discussed above in conjunction with Figure 3.

Figure 5 shows a flowchart of another part of the method 300 shown in Figure 3. More specifically, Figure 5 shows the process 360A of calculating the optimum source parameter value $U_{v,WEA,opt}$. The process begins at 507 where the index k is set to one (k = 1) and the value $r_{max}$ is set to zero ($r_{max} = 0$). Then, at 512, the optimum fitting index r for the k-th row (i.e. in this case the first row) in the matrix $r_{mat}$ is found as

$$r_{opt}(k) = max\{r_{mat}(k,1), r_{mat}(k,2), \ldots, r_{mat}(k,600)\}.$$

Then, at 517, it is determined whether $r_{opt}(k)$ is larger than $r_{max}$, i.e. whether $r_{opt}(k) > r_{max}$. If this is the case, the process continues to 522 where $U_{min}$ is set equal to $U_{v,WEA,0}*k/100$ and $r_{max}$ is set equal to $r_{opt}(k)$ before the process continues to 532. Otherwise, the process continues to 527 where it is determined whether $r_{opt}(k)$ is equal to $r_{max}$. If this is the case, the process continues to 532 where $U_{max}$ is set equal to $U_{v,WEA,0}*k/100$. If not, 532 is skipped and the process continues at 537 by incrementing k by one (i.e. k = k + 1).

Then, at 542, it is determined whether k exceeds 600, i.e. whether k > 600. If not, the process returns to 512 and repeats the steps 512, 517, 522, 527, 532, 537 and 542 as described above. Otherwise, the process continues to 547 where the optimum source parameter values $U_{v,WEA,opt}$ is determined as the middle value of $U_{max}$ and $U_{min}$, i.e. as

$$U_{v,WEA,opt} = (U_{max} + U_{min})/2$$

before the method 300 continues at 365 as discussed above in conjunction with Figure 3.

Figure 6 shows a flowchart of yet another part of the method 300 shown in Figure 3. More specifically, Figure 6 shows the process 360B of calculating the optimum impedance parameter value $Z_{v,WEA,opt}$. The process begins at 608 where the index k is set to one (k = 1) and the value $r_{max}$ is set to zero ($r_{max} = 0$). Then, at 613, the optimum fitting index r for the k-th column (i.e. in this case the first column) in the matrix $r_{mat}$ is found as

$$r_{opt}(k) = max\{r_{mat}(1,k), r_{mat}(2,k), \ldots, r_{mat}(600,k)\}.$$

Then, at 618, it is determined whether $r_{opt}(k)$ is larger than $r_{max}$, i.e. whether $r_{opt}(k) > r_{max}$. If this is the case, the process continues to 623 where $Z_{min}$ is set equal to $Z_{v,WEA,0}*k/100$ and $r_{max}$ is set equal to $r_{opt}(k)$ before the process continues to 633. Otherwise, the process continues to 628 where it is determined whether $r_{opt}(k)$ is equal to $r_{max}$. If this is the case, the process continues to 633 where $Z_{max}$ is set equal to $Z_{v,MEA,0}*k/100$. If not, 633 is skipped and the process continues at 638 by incrementing k by one (i.e. k = k + 1).

Then, at 643, it is determined whether k exceeds 600, i.e. whether k > 600. If not, the process returns to 613 and repeats the steps 613, 618, 623, 628, 633, 638 and 643 as described above. Otherwise, the process continues to 648 where the optimum impedance parameter value $Z_{v,WEA,opt}$ is determined as the middle value of $Z_{max}$ and $Z_{min}$, i.e. as

$$Z_{v,WEA,opt} = (Z_{max} + Z_{min})/2$$

before the method 300 continues at 365 as discussed above in conjunction with Figure 3.

The processes 360A and 360B are preferably performed in parallel.

As can be seen from the above discussion of Figure 5 and Figure 6, a subset of candidate combinations (i.e. combinations of candidate source parameter values and impedance parameter values) for which the corresponding fitting index is maximal is selected by going through the matrix $r_{mat}$. Thereafter, the optimum source parameter value and the optimum impedance parameter value are determining based on the selected subset, in the present embodiment as the mean value of the maximum and minimum values in the subset.

An important aspect of the present invention is that the corresponding method relies on measured voltage and current values corresponding to the selected harmonic. Thus, the quality of the determined parameter values evidently depends on the quality of the measurement data which can generally be obtained in one of two ways: either during normal operation of the wind turbine generator while it is connected to the power grid or during operation of the wind turbine generator while it is connected to a power grid simulator. In the first case, measurements must be made during an extensive period of time in order to obtain data corresponding to a wide variety of operating conditions and power grid events. In the second case, the diversity of the measurement data may be assured by corresponding programming of the power grid simulator such that the desired conditions and events are sufficiently represented. This takes much less time and generally leads to a more precise determination of the model parameters as shown in the following.

Figure 7 shows a plot of measured harmonic voltages $U_v$ and currents $I_v$ in accordance with an embodiment of the present invention where the wind turbine generator is connected to a power grid simulator 6 (see Figure 1 and Figure 2). As can be seen, the measurement values 700 fit very well into a rectangle 701. Accordingly, there is a clear distinction between combinations of harmonic current and voltage that fit and do not fit the model (represented by the rectangle 701). This illustrates the point already made above, namely that a very precise model (source parameter value and impedance parameter value) can be obtained in this case.

As a contrast, Figure 8 shows a plot of measured harmonic voltages $U_v$ and currents $I_v$ in accordance with another embodiment of the present invention where the wind turbine is connected to a power grid 5 (see Figure 1 and Figure 2) during normal operation. In this case, the obtained measurement values 800 cover a much smaller area in the graph and both rectangles 801 and 802 appear to surround them quite well. Thus, in this case it is more difficult to obtain a precise model (source parameter value and impedance parameter value) than in the case discussed above in conjunction with Figure 7.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

**Claims**

1. A method of determining a source parameter value ($U_{v,WEA}$, $I_{v,WEA}$) and an impedance parameter value ($Z_{v,WEA}$) for an electrical model (1, 2) of a wind turbine generator, wherein the electrical model is representative of a selected harmonic occurring during operation of the wind turbine generator, the method comprising
   obtaining (310) a set of measured voltage values ($U_{v,NAP}$) and a set of measured current values ($I_{v,NAP}$) corresponding to the selected harmonic,
   calculating (315) an initial source parameter value ($U_{v,WEA,0}$) and an initial impedance parameter value ($Z_{v,WEA,0}$) based on the set of measured voltage values and the set of measured current values,
   calculating (330) a respective fitting index (r) for each of a plurality of candidate combinations of respective candidate source parameter values and candidate impedance parameter values, wherein each candidate source parameter value is obtained as a multiple of the initial source parameter value divided by a first predetermined number and each candidate impedance parameter value is obtained as a multiple of the initial source parameter value divided by a second predetermined number,
   selecting a subset of the candidate combinations for which the corresponding fitting index is maximal, and
   determining (360) the source parameter value ($U_{v,WEA,opt}$) and the impedance parameter value ($Z_{v,WEA,opt}$) based on the selected subset of candidate combinations.

2. The method according to the preceding claim, wherein the set of measured voltage values and the set of measured current values are obtained during operation of the wind turbine generator while it is connected to a power grid (5).

3. The method according to claim 1, wherein the set of measured voltage values and the set of measured current values are obtained during operation of the wind turbine generator while it is connected to a power grid simulator (6).

4. The method according to the preceding claim, wherein the power grid simulator is operated to generate a plurality of harmonics at a coupling point between the wind turbine generator and the power grid simulator.

5. The method according to any of the preceding claims, wherein the electrical model is a Thevenin equivalent circuit (1), the source parameter value is a Thevenin generator voltage ($U_{v,MEA}$), and the impedance parameter value is a Thevenin series impedance ($Z_{v,WEA}$).

6. The method according to the preceding claim, wherein the initial source parameter value is calculated as a median value of the set of measured voltage values, and wherein the initial impedance parameter value is calculated as the sum of all measured voltage values in the set of measured voltage values divided by the sum of all measured current values in the set of measured current values.

7. The method according to any of claims 1 to 4, wherein the electrical model is a Norton equivalent circuit (2), the source parameter value is a Norton generator current ($I_{v,WEA}$), and the impedance parameter value is a Norton parallel impedance ($Z_{v,WEA}$).

8. The method according to any of the preceding claims, wherein the fitting index is indicative of how well the corresponding candidate combination fits the obtained sets of measured voltage values and measured current values.

9. The method according to any of the preceding claims, wherein determining the source parameter value comprises determining a minimum source parameter value ($U_{min}$) and a maximum source parameter value ($U_{max}$) in the selected subset of candidate combinations, and
determining the source parameter value as a mean value of the minimum source parameter value and the maximum source parameter value.

10. The method according to any of the preceding claims, wherein determining the impedance parameter value comprises
determining a minimum impedance parameter value ($Z_{max}$) and a maximum impedance parameter value ($Z_{max}$) in the selected subset of candidate combinations, and
determining the impedance parameter value as a mean value of the minimum impedance parameter value and the maximum impedance parameter value.

11. A system for determining a source parameter value ($U_{v,WEA}$, $I_{v,WEA}$) and an impedance parameter value ($Z_{v,WEA}$) for an electrical model (1, 2) of a wind turbine generator, wherein the electrical model is representative of a selected harmonic occurring during operation of the wind turbine generator, the system comprising
a measurement unit configured to obtain a set of measured voltage values ($U_{v,NAP}$) and a set of measured current values ($I_{v,NAP}$) corresponding to the selected harmonic, and
a processing unit configured to
calculate an initial source parameter value ($U_{v,WEA,0}$) and an initial impedance parameter value ($Z_{v,WEA,0}$) based on the set of measured voltage values and the set of measured current values,
calculate a respective fitting index (r) for each of a plurality of candidate combinations of respective candidate source parameter values and candidate impedance parameter values, wherein each candidate source parameter value is obtained as a multiple of the initial source parameter value divided by a first predetermined number and each candidate impedance parameter value is obtained as a multiple of the initial source parameter value divided by a second predetermined number,
select a subset of the candidate combinations for which the corresponding fitting index is maximal, and
determine the source parameter value ($U_{v,WEA,opt}$) and the impedance parameter value ($Z_{v,WEA,opt}$) based on the selected subset of candidate combinations.

12. A computer program comprising computer executable instructions which, when executed by a computer processor, are adapted to cause the processor to perform the method according to any of claims 1 to 10.

## FIG 1

## FIG 2

# FIG 3

$\text{Begin}$ —305

300

Obtain $U_{v, NAP}(k)$ and $I_{v, NAP}(k)$, $k = 1, 2, ..., N_{tot}$ —310

calculate initial value $U_{v, WEA, 0}$
calculate initial value $Z_{v, WEA, 0}$
$i = 1$ —315

$U_{th} = U_{v, WEA, 0} * i/100;$
$j = 1$ —320

$Z_{th} = Z_{v, WEA, 0} * j/100$ —325

calculate fitting index r —330

$r_{mat}(i, j) = r$ —335

$j = j + 1$ —340

$j > 600$ —345
N
Y

$i = i + 1$ —350

$i > 600$ —355
N
Y

A: calculate optimum value $U_{v, WEA, opt}$
B: calculate optimum value $Z_{v, WEA, opt}$ —360

Output $U_{v, WEA, opt}$ and $Z_{v, WEA, opt}$ —365

$\text{End}$ —370

FIG 4

330

$k=1; r_{sum}=0$ — 406

411

N — $U_{v, NAP}(k) < U_{th}$

Y

421 — $(U_{v, NAP}(k) -U_{th})/Z_{th} \leq I_{v, NAP}(k) \leq (U_{v, NAP}(k)+ U_{th})/Z_{th}$

N

Y

416 — $-(U_{v, NAP}(k) -U_{th})/Z_{th} \leq I_{v, NAP}(k) \leq (U_{v, NAP}(k)+ U_{th})/Z_{th}$

N

Y

$r_{sum}=r_{sum}+1$ — 426

$k=k+1$ — 431

436

N — $k > N_{tot}$

Y

$r=r_{sum}/N_{tot}$ — 441

335

# FIG 5

360A

360

507
$$k=1; r_{max}=0$$

512
$$r_{opt}(k)=\max\{r_{mat}(k, 1), r_{mat}(k, 2), ..., r_{mat}(k, 600)\}$$

517
$$r_{opt}(k) > r_{max}$$
N
Y

527
N
$$r_{opt}(k) = r_{max}$$
Y

522
$$U_{min}=U_{v, WEA, 0}*k/100;$$
$$r_{max}=r_{opt}(k)$$

532
$$U_{max}=U_{v, WEA, 0}*k/100$$

537
$$k=k+1$$

542
N
$$k>600$$
Y

547
$$U_{v, WEA, opt}=(U_{max}+U_{min})/2$$

365

## FIG 6

360B

360

608 — $k=1; r_{max}=0$

613 — $r_{opt}(k)=\max\{r_{mat}(1, k), r_{mat}(2, k), ..., r_{mat}(600, k)\}$

618 — $r_{opt}(k) > r_{max}$  N / Y

628 — $r_{opt}(k) = r_{max}$  N / Y

623 — $Z_{min}=Z_{v, WEA, 0}*k/100;$
$r_{max}=r_{opt}(k)$

633 — $Z_{max}=Z_{v, WEA, 0}*k/100;$

638 — $k=k+1$

643 — $k>600$  N / Y

648 — $Z_{v, WEA, opt}=(Z_{max}+Z_{min})/2$

365

FIG 7

FIG 8

Europäisches
Patentamt

European
Patent Office

Office européen
des brevets

## EUROPEAN SEARCH REPORT

Application Number

EP 19 17 3711

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Md. Umar Hashmi ET AL: "Online Thevenin Equivalent Parameter Estimation using Nonlinear and Linear Recursive Least Square Algorithm", <br><br> 20 July 2016 (2016-07-20), XP55330158, Retrieved from the Internet: URL:https://arxiv.org/ftp/arxiv/papers/1610/1610.05142.pdf * the whole document * | 1-12 | INV. <br> H02J3/01 <br> H02J3/38 |
| X | EP 3 361 272 A1 (ABB SCHWEIZ AG [CH]) 15 August 2018 (2018-08-15) * the whole document * | 1-12 | |
| A | CN 109 378 855 A (UNIV SHANGHAI DIANJI) 22 February 2019 (2019-02-22) * abstract * * page 1 - page 1 * | 3,4 | |
| A | BORKOWSKI DARIUSZ: "Power system impedance tracking using sliding, finite memory complex recursive least squares", 2013 SIGNAL PROCESSING: ALGORITHMS, ARCHITECTURES, ARRANGEMENTS, AND APPLICATIONS (SPA), POZNAN UNIV OF TECHNOLOGY, 26 September 2013 (2013-09-26), pages 78-81, XP032550275, ISSN: 2326-0262 ISBN: 978-83-62065-31-8 [retrieved on 2014-01-13] | 1-12 | TECHNICAL FIELDS SEARCHED (IPC) <br><br> H02J |
| A | US 6 182 017 B1 (XU WILSUN [CA]) 30 January 2001 (2001-01-30) | 1-12 | |

-/--

The present search report has been drawn up for all claims

| Place of search | Date of completion of the search | Examiner |
|---|---|---|
| Munich | 13 November 2019 | Jansen, Helma |

EPO FORM 1503 03.82 (P04C01)

page 1 of 2

Europäisches
Patentamt

European
Patent Office

Office européen
des brevets

## EUROPEAN SEARCH REPORT

Application Number

EP 19 17 3711

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BABAK BADRZADEH ET AL: "Power system harmonic analysis in wind power plants Part I: Study methodology and techniques", INDUSTRY APPLICATIONS SOCIETY ANNUAL MEETING (IAS), 2012 IEEE, IEEE, 7 October 2012 (2012-10-07), pages 1-11, XP032278554, DOI: 10.1109/IAS.2012.6374102 ISBN: 978-1-4673-0330-9 ----- | 1-12 | |
| | | | **TECHNICAL FIELDS SEARCHED (IPC)** |

The present search report has been drawn up for all claims

| Place of search | Date of completion of the search | Examiner |
|---|---|---|
| Munich | 13 November 2019 | Jansen, Helma |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 17 3711

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2019

| Patent document cited in search report | | Publication date | Patent family member(s) | | Publication date |
|---|---|---|---|---|---|
| EP 3361272 | A1 | 15-08-2018 | NONE | | |
| CN 109378855 | A | 22-02-2019 | NONE | | |
| US 6182017 | B1 | 30-01-2001 | US 6182017 B1 | | 30-01-2001 |
| | | | WO 0010017 A1 | | 24-02-2000 |

For more details about this annex : see Official Journal of the European Patent Office, No. 12/82